# EUROPÄISCHE PATENTSCHRIFT

(11) **EP 2 598 546 B1**
(45) Veröffentlichungstag und Bekanntmachung des Hinweises auf die Patenterteilung: **10.04.2019**
(21) Anmeldenummer: 11731368.4
(22) Anmeldetag: 14.07.2011
(51) Int. Cl.: C08G 18/08, C08G 18/10, C08G 18/42, C08G 18/48, C08G 18/66, C08G 18/72, C08G 18/73, C08G 18/76, C09J 175/06, C08K 5/3477, B32B 7/12, B32B 27/08, B32B 27/36, B32B 27/40, B32B 29/00, C08K 5/00, C08L 75/04, B32B 27/30

(54) **BIOLOGISCH DESINTEGRIERBARE VERBUNDFOLIEN**
BIOLOGICALLY DISINTEGRATABLE COMPOSITE FILMS
FEUILLES COMPOSITES BIOLOGIQUEMENT DÉSINTÉGRABLES

(30) Priorität: 29.07.2010 EP 10171237
(43) Veröffentlichungstag der Anmeldung: 05.06.2013
(73) Patentinhaber: BASF SE, 67056 Ludwigshafen am Rhein (DE)
(72) Erfinder: BEYERS, Cornelis Petrus, 7600 Stellenbosch (ZA); DIEHL, Heiko, 68259 Mannheim (DE); DAHMEN, Stefan, 67251 Freinsheim (DE); KRIEGISCH, Volker, 97453 Schonungen (DE); LICHT, Ulrike, 68309 Mannheim (DE); MEYER, Axel, 69115 Heidelberg (DE); YAMAMOTO, Motonori, 68199 Mannheim (DE)
(74) Vertreter: BASF IP Association
(86) Internationale Anmeldenummer: PCT/EP2011/062016
(87) Internationale Veröffentlichungsnummer: WO 2012/013506

(56) Entgegenhaltungen:
- EP-A2- 0 666 275
- WO-A1-96/07540
- WO-A1-96/35733
- WO-A1-2005/049683
- WO-A1-2009/127556
- US-A1- 2010 004 386

## Beschreibung

Die Erfindung betrifft die Verwendung eines wässrigen Polyurethandispersionsklebstoffs zur Herstellung von biologisch desintegrierbaren Verbundfolien. Die Erfindung betrifft auch ein Verfahren zur Herstellung der Verbundfolien sowie die nach dem Verfahren hergestellten Verbundfolien.

Flexible Verpackungen bestehen häufig aus Verbundfolien, welche mit einem geeigneten Klebstoff miteinander verklebt sind, wobei mindestens eine der miteinander verbundenen Folien eine Polymerfolie ist. Es besteht ein großer Bedarf an abbaubaren Verbundfolienverpackungen, wobei als abbaubare Materialien auch sich unter biologischen Bedingungen zerfallende, d.h. desintegrierende oder kompostierbare Materialien verstanden werden.

Die große Herausforderung liegt darin, Materialien zur Verfügung zu stellen, die über die notwendige Funktionalität und Stabilität verfügen, aber unter Stimulierung einer biologisch aktiven Umgebung möglichst schnell und möglichst weitgehend zerfallen oder abgebaut werden. Auslöser des Abbaus kann ein mikrobiologischer, hydrolytischer oder oxidativer Abbau an einer speziellen Stelle in der Hauptkette eines Polymers sein. Alle Abbauprodukte sollten möglichst sicher, untoxisch und nicht in der Natur akkumulierbar sein, d. h. einem vollständigen mikrobiellen Endabbau unterliegen. Einen Einfluss auf die biologische Desintegrierbarkeit hat auch der für die Verklebung der Folien verwendete Klebstoff. Der Klebstoff soll einerseits eine stabile Verklebung gewährleisten andererseits aber auch die Abbaubarkeit, d.h. die Desintegration des Folienverbundes befördern. Es ist äußerst schwierig, diese im Grunde gegensätzlichen Anforderungen gleichzeitig zu erfüllen und zu optimieren.

Aus der WO 96/35733 sind abbaubare und kompostierbare Formkörper einschließlich Flächengebilden bekannt. Zu deren Herstellung werden wässrige Dispersionen von Harnstoffgruppen aufweisenden Polyurethanen verwendet. Die Polyurethane sind aufgebaut aus einer Diisocyanatkomponente, einer Diolkomponente, einer Diaminkomponente in Form von Diaminosulfonaten und gegebenenfalls hydrophilen Polyetheralkoholen.

Die biologische Desintegrierbarkeit ist noch nicht in jeder Hinsicht zufriedenstellend. Die Aufgabe bestand darin, weitere Materialien für abbaubare bzw. desintegrierbare Verbundfolien, insbesondere für flexible Verpackungen zur Verfügung zu stellen, die möglichst einfach herstellbar sind mit möglichst guten Klebeeigenschaften und gleichzeitig auch möglichst guter biologischer Desintegrierbarkeit.

Es wurde gefunden, dass die Aufgabe gelöst werden kann durch Verwendung der nachstehend beschriebenen Polyurethanklebstoffdispersionen. Gegenstand der Erfindung ist die Verwendung eines wässrigen Polyurethandispersionsklebstoffs zur Herstellung von biologisch desintegrierbaren Verbundfolien wobei mindestens ein erstes Substrat unter Verwendung des Polyurethandispersionsklebstoffs mit mindestens einem zweiten Substrat verklebt wird, wobei beide Substrate biologisch desintegrierbar sind und mindestens eines der Substrate eine biologisch desintegrierbare Polymerfolie ist und wobei das Polyurethan zu mindestens 60 Gew.-% aufgebaut ist aus
(a) mindestens einem Diisocyanat,
(b) mindestens einem Polyesterdiol und
(c) mindestens einer bifunktionellen Carbonsäure, ausgewählt aus Dihydroxycarbonsäuren und Diaminocarbonsäuren, wobei der Polyurethandispersionsklebstoff biologisch abbaubar ist und das mindestens eine Polyesterdiol (b) zu mindestens 80 Gew.% aufgebaut ist aus mindestens einer aliphatischen Dicarbonsäure und mindestens einem aliphatischen Diol.

Gegenstand der Erfindung ist auch ein Verfahren zur Herstellung von Verbundfolien, wobei ein wässriger Polyurethandispersionsklebstoff auf Basis der erfindungsgemäß zu verwendenden Polyurethane zur Verfügung gestellt wird und mindestens zwei Substrate unter Verwendung des wässrigen Polyurethandispersionsklebstoffs miteinander verklebt werden, wobei mindestens eines der Substrate eine biologisch desintegrierbare Polymerfolie ist. Gegenstand der Erfindung sind auch Verbundfolien, hergestellt nach dem erfindungsgemäßen Verfahren.

Biologische Desintegrierbarkeit im Sinne dieser Anmeldung ist beispielsweise dann gegeben, wenn nach einer aeroben Kompostierung von höchstens 12 Wochen Dauer in einer > 2mm-Siebfraktion maximal 10% des ursprünglichen Trockengewichts des Prüfmaterials gefunden werden, gemessen gemäß der Norm EN 13432 (2000)).

Der erfindungsgemäß zu verwendende Klebstoff besteht im Wesentlichen aus mindestens einem in Wasser dispergiertem Polyurethan als polymeres Bindemittel und optional Zusatzstoffen wie Füllstoffen, Verdicker, Entschäumer etc. Das polymere Bindemittel liegt vorzugsweise als Dispersion in Wasser oder auch in einem Gemisch aus Wasser und wasserlöslichen organischen Lösungsmitteln mit Siedepunkten von vorzugsweise unter 150°C (1 bar) vor. Besonders bevorzugt ist Wasser als einziges Lösungsmittel. Bei Gewichtsangaben zur Zusammensetzung des Klebstoffs wird das Wasser oder sonstige Lösemittel nicht mitberechnet.

Der Polyurethandispersionsklebstoff ist biologisch abbaubar. Biologische Desintegrierbarkeit im Sinne dieser Anmeldung ist beispielsweise dann gegeben, wenn das Verhältnis von in Form von CO2 freigesetztem, gasförmigen Kohlenstoff zu dem Gesamtkohlenstoffgehalt des eingesetzten Materials nach 20 Tagen mindestens 30%, vorzugsweise mindestens 60 oder mindestens 80% beträgt, gemessen gemäß der Norm ISO 14855 (2005).

Die Polyurethane bestehen vorzugsweise überwiegend aus Polyisocyanaten, insbesondere Diisocyanaten einerseits und als Reaktionspartner, Polyesterdiole sowie bifunktionellen Carbonsäuren andererseits. Das Polyurethan ist zu mindestens 60 Gew.-% und ganz besonders bevorzugt zu mindestens 80 Gew.-% aus Diisocyanaten, Polyesterdiolen und bifunktionellen Carbonsäuren aufgebaut.

Das Polyurethan kann amorph oder teilkristallin sein. Wenn das Polyurethan teilkristallin ist, so ist der Schmelzpunkt vorzugsweise kleiner 80 °C. Bevorzugt enthält das Polyurethan dazu Polyesterdiole in einer Menge von mehr als 10 Gew.-%, mehr als 50 Gew.% oder mindestens 80 Gew.%, bezogen auf das Polyurethan.

Insgesamt ist das Polyurethan vorzugsweise aufgebaut aus:
a) Diisocyanaten,
b) Diolen, von denen
   b₁₎ 10 bis 100 mol-%, bezogen auf die Gesamtmenge der Diole (b), Polyesterdiole sind und ein Molekulargewicht von 500 bis 5000 g/mol aufweisen,
   b₂₎ 0 bis 90 mol-%, bezogen auf die Gesamtmenge der Diole (b), ein Molekulargewicht von 60 bis 500 g/mol aufweisen,
c) mindestens einer bifunktionellen Carbonsäure, ausgewählt aus Dihydroxycarbonsäuren und Diaminocarbonsäuren,
d) optional weiteren, von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) optional von den Monomeren (a) bis (d) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Insbesondere zu nennen sind als Monomere (a) Diisocyanate X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-lsocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische. Derartige Diisocyanate sind im Handel erhältlich. Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt. Zum Aufbau der Polyurethane kann man als Verbindungen außer den vorgenannten auch Isocyanate einsetzen, die neben den freien Isocyanatgruppen weitere verkappte Isocyanatgruppen, z.B. Uretdiongruppen tragen. Im Hinblick auf gute Filmbildung und Elastizität kommen als Diole (b) vornehmlich höhermolekulare Diole (b1) in Betracht, die ein Molekulargewicht von etwa 500 bis 5000, vorzugsweise von etwa 1000 bis 3000 g/mol haben. Es handelt sich hierbei um das zahlenmittlere Molgewicht Mn. Mn ergibt sich durch Bestimmung der Anzahl der Endgruppen (OH-Zahl). Bei den Diolen (b1) kann es sich um Polyesterpolyole handeln, die z.B. aus Ullmanns Enzyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z.B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Optional kommen auch Polycarbonatdiole, wie sie z.B. durch Umsetzung von Phosgen mit einem Überschuss von den als Aufbaukomponenten für die Polyesterpolyole genannten niedermolekularen Alkoholen erhalten werden können, in Betracht.

Es können auch Polyesterdiole auf Lacton-Basis alleine oder in Kombination mit den oben genannten Polyesterdiolen verwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind epsilon-Caprolacton, β-Propiolacton, gamma-Butyrolacton und/oder Methyl-epsilon-caprolacton sowie deren Gemisehe. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Zusätzlich zu den Polyesterdiolen können optional auch Polyetherdiole mitverwendet werden. Polyetherdiole sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxyphenyl)-propan oder Anilin erhältlich. Polyetherdiole sind z.B. Polypropylenoxid, Polytetrahydrofuran eines Molekulargewichts von 240 bis 5000, und vor allem 500 bis 4500 g/mol. Vorzugsweise werden aber keine Polyetherdiole als Aufbaukomponente für die Polyurethane eingesetzt.

Optional können auch Polyhydroxyolefine mitverwendet werden, bevorzugt solche mit 2 endständigen Hydroxylgruppen, z.B. α,-ω-Dihydroxypoiybutadien, α,-ω-Dihydroxypolymethacrylester oder α,-ω-Dihydroxypolyacrylester. Weitere geeignete Polyole sind Polyacetale, Polysiloxane und Alkydharze.

Bevorzugt handelt es sich bei mindestens 95 mol-% oder bei 100 mol-% der Diole b₁) um Polyesterdiole. Besonders bevorzugt werden als Diole b₁) ausschließlich Polyesterdiole verwendet.

Die Härte und der Elastizitätsmodul der Polyurethane lassen sich erhöhen, wenn als Diole (b) neben den Diolen (b₁) noch niedermolekulare Diole (b₂) mit einem Molekulargewicht von etwa 60 bis 500, vorzugsweise von 62 bis 200 g/mol, eingesetzt werden. Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer geradzahligen Anzahl von C-Atomen sowie Pentan-1,5-diol und Neopentylglykol bevorzugt werden. Als Diole b₂₎ kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bevorzugt beträgt der Anteil der Diole (b₁), bezogen auf die Gesamtmenge der Diole (b) 10 bis 100 mol-% oder 60 bis 100 mol% und der Anteil der Monomere (b₂), bezogen auf die Gesamtmenge der Diole (b) 0 bis 90 mol-%, oder 0 bis 40 mol%.

Um die Wasserdispergierbarkeit der Polyurethane zu erreichen und zur Verbesserung der biologischen Abbaubarkeit enthalten die Polyurethane mindestens eine bifunktionelle Carbonsäure, ausgewählt aus Dihydroxycarbonsäuren und Diaminocarbonsäuren. Optional können zusätzlich weitere, die Dispergierbarkeit fördernde hydrophile Aufbaukomponenten verwendet werden, die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a) bis (f) wird im allgemeinen so bemessen, dass die Molmenge der (potentiell) hydrophilen Gruppen, bezogen auf die Gewichtsmenge aller Monomere (a) bis (f), 30 bis 1000, bevorzugt 50 bis 500 und besonders bevorzugt 80 bis 300 mmol/kg beträgt. Bei den (potentiell) hydrophilen Gruppen kann es sich um nichtionische oder bevorzugt um (potentiell) ionische hydrophile Gruppen handeln. Als nichtionische hydrophile Gruppen kommen insbesondere Polyethylenglykolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (f). Monomere mit nichtionischen hydrophilen Gruppen sind z.B. Polyethylenoxiddiole mit mindestens 20 Gew.-% Ethylenoxid, Polyethylenoxidmonoole sowie die Reaktionsprodukte aus einem Polyethylenglykol und einem Diisocyanat, die einen endständig veretherten Polyethylenglykolrest tragen. Derartige Diisocyanate sowie Verfahren zu deren Herstellung sind in den Patentschriften US-A 3 905 929 und US-A 3 920 598 angegeben.

Als bifunktionelle Carbonsäure kommen üblicherweise aliphatische, cycloaliphatische, araliphatische oder aromatische Carbonsäuren in Betracht, die mindestens zwei Hydroxylgruppen oder zwei primäre oder sekundäre Aminogruppen tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (c₁) 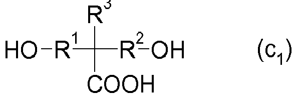 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen Diaminocarbonsäuren oder die in der DE-A 2034479 genannten Addukte von aliphatischen diprimären Diaminen an alpha,β-ungesättigte Carbonsäuren in Betracht. Solche Verbindungen gehorchen beispielsweise der Formel (c₂)

H₂N-R⁴-NH-R⁵-X (c₂)

in der R⁴ und R⁵ unabhängig voneinander für eine C₁- bis C₆-Alkandiyl-Einheit, bevorzugt Ethylen und X für COOH stehen. Besonders bevorzugte Verbindungen der Formel (c₂) sind die N-(2-Aminoethyl)-2-aminoethancarbonsäure bzw. die entsprechenden Alkalisalze, wobei Na als Gegenion besonders bevorzugt ist.

Neben den bifunktionellen Carbonsäuren können optional noch weitere Monomere mit hydrophilen Gruppen verwendet werden, z.B. entsprechende Dihydroxysulfonsäuren und Dihydroxyphosphonsäuren wie 2,3-Dihydroxypropanphosphonsäure oder Diaminosulfonsäuren. Vorzugsweise werden jedoch keine bifunktionellen Sulfonsäuren oder Phosphonsäuren verwendet.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammoniumgruppen, insbesondere protonierte tertiäre Aminogruppen oder quartäre Ammoniumgruppen. Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen oder tertiäre Aminogruppen. (Potentiell) ionische Monomere sind z.B. in Ullmanns Enzyklopädie der technischen Chemie, 4. Auflage, Band 19, S.311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin oder N,N'-Dimethylhydrazin, in an sich üblicher Weise zugänglich sind, in Betracht. Derartige Polyether weisen im Allgemeinen ein zwischen 500 und 6000 g/mol liegendes Molgewicht auf. Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden oder Benzylhalogeniden, z.B. Bromiden oder Chloriden, in die Ammoniumsalze überführt.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylatgruppen in Form ihrer Salze mit einem Alkaliion oder einem Ammoniumion als Gegenion vor.

Die Monomere (d), die von den Monomeren (a) bis (c) verschieden sind und welche gegebenenfalls auch Bestandteile des Polyurethans sind, dienen im Allgemeinen der Vernetzung oder der Kettenverlängerung. Es sind im Allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen. Alkohole mit einer höheren Wertigkeit als 2, die zur Einstellung eines gewissen Verzweigungs- oder Vernetzungsgrades dienen können, sind z.B. Trimethylolpropan, Glycerin oder Zucker. Ferner kommen Monoalkohole in Betracht, die neben der Hydroxylgruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt. Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d). Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die gegebenenfalls mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI) und Ester von Acryl- oder Methacrylsäure wie Hydroxyethylacrylat oder Hydroxyethylmethacrylat.

Klebstoffe mit einem besonders guten Eigenschaftsprofil erhält man vor allem dann, wenn als Monomere (a) im Wesentlichen nur aliphatische Diisocyanate, cycloaliphatische Diisocyanate oder araliphatische Diisocyanate eingesetzt werden. Diese Monomerkombination wird in hervorragender Weise ergänzt als Komponente (c) durch Dihydroxy- oder Diaminomonocarbonsäure-Alkali-Salze; wobei das Na-Salz am besten geeignet ist.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten (a) bis (e) sowie ihre jeweiligen Molmengen so gewählt, dass das Verhältnis A : B mit
- A: der Molmenge an Isocyanatgruppen und
- B: der Summe aus der Molmenge der Hydroxylgruppen und der Molmenge der funktionellen Gruppen, die mit Isocyanaten in einer Additionsreaktion reagieren können,
0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Aufbaukomponenten zur Herstellung des Polyurethans erfolgt vorzugsweise bei Reaktionstemperaturen von bis zu 180°C, bevorzugt bis zu 150°C unter Normaldruck oder unter autogenem Druck. Die Herstellung von Polyurethanen, bzw. von wässrigen Polyurethandispersionen ist dem Fachmann bekannt. Die Polyurethane liegen vorzugsweise als wässrige Dispersion vor und werden in dieser Form verwendet. Der pH-Wert der Polymerdispersion wird vorzugsweise auf pH größer 5, insbesondere auf einen pH-Wert zwischen 5,5 und 8,5 eingestellt.

Der erfindungsgemäß zu verwendende Klebstoff enthält Carboxylatgruppen und vorzugsweise weitere reaktive Gruppen, die untereinander oder mit externen Vernetzungsmitteln eine Vernetzungsreaktion eingehen können. Diese reaktiven Gruppen liegen vorzugsweise in einer Menge von 0,0001 bis 0,5 Mol, besonders bevorzugt von 0,0005 bis 0,5 Mol/100 g Klebstoff vor. Carboxylgruppen werden auch durch Verseifungsreaktionen gebildet, so dass auch ohne einen anfänglichen Gehalt an Carboxylgruppen im Polyurethan eine Vernetzung eintreten kann.

In einer Ausführungsform der Erfindung enthält der Polyurethandispersionsklebstoff mindestens einen externen Vernetzer. Geeignete Vernetzungsmittel sind z.B. Polyisocyanate mit mindestens zwei Isocyanatgruppen, z.B. aus Diisocyanaten gebildete Isocyanurate, Verbindungen mit mindestens einer Carbodiimidgruppe, chemisch blockierte Isocyanate, verkapselte Isocyanate, verkapselte Uretdione, Biurete oder Allophanate. Geeignet sind auch Aziridine, Oxazoline und Epoxide. Der externe Vernetzer wird vorzugsweise in einer Menge von 0,5 bis 10 Gew.%, bezogen auf Feststoffgehalt der Dispersion, eingesetzt. Ein externer Vernetzer ist eine Verbindung, welche vor der Vernetzungsreaktion nicht an das Polyurethan gebunden ist sondern in der Polyurethandispersion gelöst oder dispergiert ist. In Betracht kommen aber auch Vernetzer, die an das Polyurethan gebunden sind (interne Vernetzer).

Die erfindungsgemäßen Polyurethandispersionen werden erfindungsgemäß in wässrigen Klebstoffzubereitungen für die Herstellung von Laminaten, d. h. in wässrigen Kaschierklebstoffzubereitungen zum Verkleben von großflächigen Substraten; insbesondere für die Herstellung von Verbundfolien verwendet.

Die vorliegende Erfindung betrifft somit auch ein Verfahren zur Herstellung von Verbundfolien, bei dem man eine wässrige Klebstoffzubereitung einsetzt, die wenigstens eine erfindungsgemäße Polymerdispersion umfasst. Hierbei können die wässrigen Polymerdispersionen als solche oder nach Konfektionierung mit üblichen Hilfsstoffen eingesetzt werden. Übliche Hilfsstoffe sind beispielsweise Netzmittel, Verdicker, Schutzkolloide, Lichtschutzstabilisatoren, Biozide, Entschäumer usw. Die erfindungsgemäßen Klebstoffzubereitungen benötigen nicht den Zusatz von weichmachenden Harzen (Tackifiern) oder anderen Weichmachern. Bei dem Verfahren zur Herstellung von Verbundfolien werden mindestens zwei Substrate unter Verwendung der wässrigen Polymerdispersion miteinander verklebt. Die Substrate sind großflächige, flexible Komponenten, von denen mindestens eine, vorzugsweise zwei Polymerfolien sind.

Bei dem erfindungsgemäßen Verfahren zur Herstellung von Verbundfolien wird die erfindungsgemäße Polymerdispersion oder eine entsprechend konfektionierte Zubereitung auf die zu verklebenden Substrate vorzugsweise mit einer Schichtdicke von 0,1 bis 20 g/m², besonders bevorzugt 1 bis 7 g/m² z. B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200 °C, vorzugsweise 20 bis 100 °C und der Druck z. B. 100 bis 3000 kN/m², vorzugsweise 300 bis 2000 kN/m² betragen kann.

In einer Ausführungsform wird die erfindungsgemäße Polymerdispersion als Einkomponentenmittel angewendet, d.h. ohne zusätzliche Vernetzungsmittel, insbesondere ohne Isocyanatvernetzer. Jedoch kann die erfindungsgemäße Polymerdispersion auch als zweikomponentiger Klebstoff verwendet werden, bei dem eine Vernetzungskomponente, wie z.B. ein wasseremulgierbares Isocyanat, zugesetzt wird. Wenigstens eines der Substrate kann auf der mit dem Klebstoff beschichteten Seite bedruckt oder metallisiert sein. Beide Substrate sind biologisch desintegrierbar.

Es kann von Vorteil sein, das biologisch desintegrierbare Polymer (das erste Substrat) durch Extrusionsbeschichtung auf das zweite Substrat aufzubringen. Die zuvor erwähnte wässrige Kaschierklebstoffzubereitung (Polymerdispersion) wird als Zwischenschicht aufgebracht. Der Vorteil in der Verwendung der Kaschierklebstoffzubereitung bei der Extrusionsbeschichtung liegt darin begründet, dass die Extrusionstemperatur gesenkt werden kann. Die schonende Fahrweise spart Energie und beugt einer eventuellen Zersetzung des biologisch desintegrierbaren Polymers vor.

Im Sinne der vorliegenden Erfindung ist das Merkmal "biologisch desintegrierbar oder abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Als Substrate eignen sich z. B. Folien aus Lignin, Stärke, Cellulosematerialien, Polymilchsäure (PLA), Polymilchsäure-Stereokomplexen (PLLA-PDLA), Polyglykolsäure (PGA), aliphatischen Polyestern, aliphatisch-aromatischen Copolyestern, Polyhydroxyalkanoaten, Zellophan, Polypropylencarbonat (PPC) und Mischungen der genannten Materialien. Aliphatische Polyester sind z.B. Polybutylensuccinat (PBS), Polybutylensuccinat-co-butylen adipat (PBSA), Polybutylensuccinat-co-butylensebacat (PBSSe), Polycaprolacton (PCL) und Polypentadecanolid. Aliphatisch-aromatische Copolyester sind z.B. Polybutylenadipat-co-butylenterephthalat (PBAT), Polybutylensebacat-co-butylenterephthalat (PBSeT), Polybutylenazelat-co-Butylenterephthalat (PBAzeT), Polybutylenbrassylat-co-butylenterephthalat (PBBrasT). Besonders geeignet sind z.B. Ecoflex®-Folien, z.B. Ecoflex® F oder Ecoflex® FS. Polyhydroxyalkanoate sind z.B. Poly-3-hydroxybutylat (PHB), Poly-3-hydroxybutylat-co-3-hydroxyvalelat (P(3HB)-co-P(3HV)), Poly-3-hydroxybutylat-co-4-hydroxybutylat (P(3HB)-co-P(4HB)), Poly-3-hydroxybutylat-co-3-hydroxyhexanoat (P(3HB)-co-P(3HH)). Geeignete Mischungen sind insbesondere Mischungen von aliphatisch-aromatischen Copolyestern mit PLA (z.B. Ecovio®-Folien) oder Mischungen von aliphatischen Polyestern, aliphatisch-aromatischen Copolyestern oder Polyvinylalkohol mit Stärke (z.B. Mater-Bi®-Folien).

Die Folien können auch mit Metall, z. B. Aluminium, beschichtete (bedampfte) Polymerfolien (kurz: metallisierte Folien) sein. Die genannten Folien können beispielsweise auch mit Druckfarben bedruckt sein. Vorzugsweise ist das Material des ersten Substrats ausgewählt aus Lignin, Stärke, Cellulosematerialien, Polymilchsäure, Polyglykolsäure, aliphatischen Polyestern, aliphatisch-aromatischen Copolyestern, Polyhydroxyalkanoaten, Polypropylencarbonat und Mischungen der genannten Materialien und das Material des zweiten Substrats ausgewählt aus Papier, Lignin, Stärke, Cellulosematerialien, Polymilchsäure, Polyglykolsäure, aliphatischen Polyestern, aliphatisch-aromatischen Copolyestern, Polyhydroxyalkanoaten, Polypropylencarbonat und Mischungen der genannten Materialien.

In einer Ausführungsform der Erfindung ist die erste Folie und/oder die zweite Folie auf der jeweiligen Seite, welche mit der erfindungsgemäßen Polymerdispersion beschichtet wird, bedruckt oder metallisiert. Die Dicke der Substratfilme kann beispielsweise von 5 bis 100 µm, vorzugsweise von 5 bis 40 µm betragen.

Insbesondere bevorzugt sind Verbundfolien, wobei das Material des ersten Substrats Papier und das Material des zweiten Substrats Polymilchsäure oder eine Mischung enthaltend Polymilchsäure und einen aliphatisch-aromatischen Copolyester sind.

Diese Verbundfolien lassen sich wie zuvor erwähnt durch Laminier- oder Extrusionsverfahren herstellen. Ein vorteilhaftes Extrusionsverfahren zur Papierbeschichtung und hierfür bevorzugte biologisch desintegrierbare Polymere werden in der WO 2010/034712 beschrieben, auf die hier ausdrücklich verwiesen wird. Ergänzt wird die Extrusionsbeschichtung nach WO 2010/034712 um die erfindungsgemäße Kaschierkleber-Schicht zwischen erstem und zweiten Substrat.

Dispersionsbeschichtungen erfordern keine Aufheizung vor der Applikation. Die Auftragstechnologie ist vergleichbar mit der der Schmelzekleber, wenn es um flächige Beschichtungen geht. Die Bahngeschwindigkeiten sind mit bis zu 3000 m/min. am höchsten. Damit sind Dispersionsbeschichtungen auch online auf Papiermaschinen möglich.

Bei dünnen Schichten kommt auch der Auftrag des biologisch desintegrierbaren Polymers als Hotmelt, gewissermaßen als Spezialfall der Extrusionsbeschichtung oder der Dispersionsauftrag in Betracht. Dieses Verfahren ist beschrieben in Ullmann, TSE Troller Coating. Der Schmelzkleber (Hotmelt) wird aus einem auf ca. 150 bis 200°C vorgewärmten Vorratsbehälter in die Düse gepumpt, über die der Oberflächenauftrag erfolgt.

Die Extrusionsbeschichtung wurde entwickelt, um dünne Polymerschichten auf flexible Substrate wie Papier, Karton, oder Mehrschichtfolien mit Metallschicht mit hohen Bahngeschwindigkeiten von 100 - 600 m/min. aufzubringen. Die biologisch desintegrierbaren Polymere können auf existierenden Extrusionsbeschichtungsanlagen für Polyethylen verarbeitet werden (J. Nentwig: Kunststofffolien, Hanser Verlag, München 2006, S. 195; H. J. Saechtling: Kunststoff Taschenbuch, Hanser Verlag, München 2007, S. 256; C. Rauwendaal:L Polymer Extrusion, Hanser Verlag, München 2004, S. 547.).

Als Substrat werden "Papierprodukte" verwendet. Unter dem Begriff "Papierprodukte" fallen im Sinne der vorliegenden Erfindung alle Arten von Papier und insbesondere Pappe und Karton.

Als Faserstoffe zur Herstellung dieser Papierprodukte kommen sämtliche dafür gebräuchlichen Qualitäten in Betracht, z.B. Holzstoff, gebleichter und ungebleichter Zellstoff, Papierstoffe aus allen Einjahrespflanzen sowie Altpapier (auch als Ausschuss, sowohl gestrichen als auch ungestrichen). Diese Faserstoffe können entweder allein oder in beliebiger Mischung miteinander zu Herstellung der Pulpen, aus denen die Papierprodukte hergestellt werden, eingesetzt werden. Zu Holzstoff gehören beispielsweise Holzschliff, thermomechanischer Stoff (TMP), chemothermomechanischer Stoff (CTMP), Druckschliff, Halbzellstoff, Hochausbeute-Zellstoff und Refiner Mechanical Pulp (RMP). Als Zellstoff kommen beispielsweise Sulfat-, Sulfit- und Natronzellstoffe in Betracht. Geeignete Einjahrespflanzen zur Herstellung von Papierstoffen sind beispielsweise Reis, Weizen, Zuckerrohr und Kenaf.

Üblicherweise werden den Zellstoffen Leimungsmittel in einer Menge von 0,01 bis 3 Gew.-%, bevorzugt 0,05 bis 1 Gew.-%, jeweils fest, bezogen auf trockenen Papierstoff, zugesetzt und richten sich nach dem gewünschten Leimungsgrad der auszurüstenden Papiere. Des Weiteren kann der Papierwerkstoff weitere Stoffe enthalten, wie z. B. Stärke, Pigmente, Farbstoffe, optische Aufheller, Biozide, Verfestiger für Papier, Fixiermittel, Entschäumer, Retentionsmittel, und/oder Entwässerungsmittel.

Die hergestellten Kraftliner (Verbundfolien) sind vorzugsweise wie folgt aufgebaut:
i) Papierwerkstoff der Grammatur 30 bis 600 g/m², vorzugsweise 40 bis 400 und insbesondere bevorzugt 50 bis 150 g/m²,
ii) eine 1 bis 100 µm, vorzugsweise 5 bis 80 µm und insbesondere bevorzugt 10 bis 60 µm dicke biologisch desintegrierbare Polymerschicht.

Für die Papierschichten kommen die unterschiedlichsten Materialien in Frage, z. B. weißer oder brauner Kraftliner, Halbstoff, Altpapier, Wellenstoff oder Schrenz.

In der Regel weist der Papierfolienverbund eine Gesamtdicke von 31 bis 1000 g/m² auf. Vorzugsweise kann durch Laminierung ein Papierfolienverbund von 80 bis 500 µm und besonders bevorzugt durch Extrusionsbeschichtung ein Papierfolienverbund von 50 bis 300 µm hergestellt werden.

Eine Oberflächenbehandlung der Foliensubstrate ist vor der Beschichtung mit einer erfindungsgemäßen Polymerdispersion nicht unbedingt erforderlich. Bessere Ergebnisse können aber erhalten werden, wenn die Oberfläche der Foliensubstrate vor der Beschichtung modifiziert wird. Hierbei können übliche Oberflächenbehandlungen angewendet werden, z.B. Coronabehandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung verwendet werden. Außerdem können die Verbundfolien, weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der der mit Klebstoff beschichteten Seite abgewandten Seite des Foliensubstrats oder innen, zwischen Foliensubstrat und Klebstoffschicht befinden.

In der erfindungsgemäßen Verbundfolie ist das zweite Substrat (z. B. Papier) vor Öl, Mineralöl, Fett und Feuchtigkeit geschützt, weil das erste Substrat (z.B. biologisch desintegrierbare Polymerfolie) eine entsprechende Barrierefunktion ausübt. Umgekehrt werden bei der Verwendung der Verbundfolien für Lebensmittelverpackungen die Lebensmittel vor den im beispielsweise Altpapier enthaltenen Mineralölen und Mineralstoffen geschützt, da das erste Substrat (z.B. biologisch desintegrierbare Polymerfolie) diese Barrierefunktion ausübt. Weiterhin ermöglicht die Verbundfolie durch ihre Verschweißbarkeit mit sich selbst sowie Papier, Karton und Metall die Herstellung von beispielsweise Kaffeebechern, Getränkekartons oder Kartons für Gefriergut.

Insbesondere eignet sich die Verbundfolie zur Herstellung von Papierbeuteln für trockene Lebensmittel wie z.B. Kaffee, Tee, Suppenpulver, Saucenpulver; für Flüssigkeiten wie z.B. Kosmetika, Reinigungsmittel, Getränke; von Tubenlaminaten; von Papiertragetaschen; von Papierlaminaten und coextrudaten für Eiscreme, Süßwaren (z.B. Schoko- und Müsli-Riegel), von Papierklebeband; von Kartonbechern (Pappbechern), Yoghurtbechern; von Menueschalen; von gewickelten Kartonbehältern (Dosen, Fässer), von nassfesten Kartons für Umverpackungen (Weinflaschen Lebensmittel); von Obststeigen aus beschichtetem Karton; von Fast Food-Teller; von Clamp Shells; von Getränkekartons und Kartons für Flüssigkeiten wie Wasch- und Reinigungsmittel, Gefriergutkartons, Eisverpackungen (z. B. Eisbecher, Einwickler für konische Eiscreme-Waffeln); von Papieretiketten; von Blumen- und Pflanztöpfen.

Die erfindungsgemäß hergestellten Verbundfolien sind besonders geeignet für die Herstellung von flexiblen Verpackungen, insbesondere für Lebensmittelverpackungen.

Es ist ein Vorteil der Erfindung, dass die erfindungsgemäß eingesetzten Polyurethanklebstoffdispersionen unterschiedliche Substrate gut miteinander verkleben können, wobei eine hohe Festigkeit des verklebten Verbundes bewirkt wird. Zudem zeichnen sich die erfindungsgemäß hergestellten Verbundfolien durch eine gute biologische Abbaubarkeit aus.

### Beispiele

### Beispiel 1

996,77 g eines Polyesterdiols aus Adipinsäure und Butandiol-1,4 (OHZ=43,9) und 0,13 g Tetrabutyltitanat (TBOT) werden in 260 g Aceton gelöst, auf 60°C erwärmt und mit 46,2 g Toluylendiisocyanat 1 h bei 65°C umgesetzt; danach noch mit 44,6 g Hexamethylendiisocyanat 3,5 h bei 66°C weiterreagiert. Dann wird mit 1040 g Aceton verdünnt und auf 50°C abgekühlt. Der NCO-Gehalt beträgt dann 0,5%. Es wird mit 51,2 g einer 40%igen wässrigen Lösung des Natriumsalzes der Aminoethylaminopropionsäure 15 min kettenverlängert und mit 1638 g vollentsalztem Wasser dispergiert. Das Aceton wird im Vakuum bei Temperaturen bis 43°C abdestilliert und der Feststoffgehalt auf 40% eingestellt.
Analysenwerte: LD: 87,5; Viskosität: 32 mPas; K-Wert:51; pH: 8,0

### Beispiel 2

400 g eines Polyesterdiols aus einem 1:1 Gemisch von Adipinsäure und Isophthalsäure und 1,6- Hexandiol (OHZ: 56) werden mit 20,1 g Dimethylolpropionsäure und 150 g Aceton bei 40°C gerührt und mit 112 g Hexamethylendiisocyanat 3 h bei einer Außentemperatur von 90°C umgesetzt. Dann wird mit 550 g Aceton verdünnt und auf 30°C abgekühlt. Der NCO-Gehalt beträgt 2%. Es wird mit 12 g Triethylamin neutralisiert und mit 34 g Isophorondiamin kettenverlängert. Dann wird mit 650 g vollentsalztem Wasser dispergiert und sofort danach mit 8,2 g Diethylentriamin gelöst in 100 g vollentsalztem Wasser vernetzt. Das Aceton wird im Vakuum bei Temperaturen bis 42°C abdestilliert.
Analysenwerte: Feststoffgehalt 44 %; LD: 80; Viskosität: 21 mPas

### Beispiel 3 (Vergleichsbeispiel, nicht abbaubar)

801 g Polypropylenoxiddiol (OHZ 56) werden mit 64,4 g Dimethylolpropionsäure und 153,3 g Toluylendiisocyanat in 70 g Aceton bei 100°C 6 h umgesetzt. Dann wird mit 800 g Aceton verdünnt und auf 30°C abgekühlt. Der NCO-Gehalt beträgt <0,2%. Es wird mit 8,64 g NaOH (50%ig) vermischt mit 50 g vollentsalztem Wasser neutralisiert und mit 650 g vollentsalztem Wasser dispergiert. Das Aceton wird im Vakuum bei Temperaturen bis 42°C abdestilliert und die Dispersion auf 60% Feststoffgehalt eingestellt.
Analysenwerte: LD: 42; Viskosität: 185 mPas; K-Wert: 42; pH:6,4

### Beispiel 4 (Vergleich gemäß WO 96/35733, Beispiel 3)

510 g eines Polyesterdiols aus Adipinsäure und 1,6-Hexandiol/Neopentylglykol 2:1 (OHZ=57), werden im Vakuum bei 120°C Außentemperatur entwässert, unter Stickstoffatmosphäre werden 0,6 g Benzoylchlorid und 90,3 g Hexamethylendiisocyanat zugegeben und bei 115 °C Innentemperatur 30 min umgesetzt. Es wird mit 1500 g Aceton verdünnt und dabei auf 50°C abgekühlt. Der NCO-Gehalt beträgt dann 1%. Es wird mit einem Gemisch aus 29,08 g einer 50%igen wässrigen Lösung des Natriumsalzes der Aminoethylaminoethansulfonsäure, 4,5 g Ethylendiamin und 60 g vollentsalztem Wasser 15 min kettenverlängert und mit 900 g vollentsalztem Wasser 15 min dispergiert. Das Aceton wird im Vakuum bei Temperaturen bis 51 °C abdestilliert.
Analysenwerte: Feststoffgehalt: 46%; LD: 44; Viskosität 16,4 mPas; K-Wert: 77; pH 6,4

### Beispiel 5 (mit Vernetzer)

Zu der Dispersion gemäß Beispiel 1 wurde ein Isocyanurat auf Basis von Hexamethylendiisocyanat in einer Menge von 3 Gew.% (entspricht 7,5 Gew.% auf eingesetzten Feststoff) zugegeben.

### Kompostiertest

Aus den Dispersionen der Beispiele 1 und 4 wurden in Glasschalen durch Trocknung bei 60°C Folien hergestellt. Die Folien haben einen Durchmesser von 4,5 cm und eine Dicke von 1 mm.

Die Folien wurden in Kompost eingegraben und bei 58°C inkubiert. Die Folien wurden in regelmäßigen Abständen visuell beurteilt und gewogen.

### Start:

Beispiel 1: Gewicht: 100%
Beispiel 4: Gewicht 100%

### Nach 3 Wochen:

Beispiel 1: Gewicht: ca. 90%, grobe, unebene Oberfläche, fast durchlöchert, deutlich abgebaut
Beispiel 4: Gewicht ca. 96%; Oberfläche angeraut, sehr leicht abgebaut

### Nach 6 Wochen:

Beispiel 1: Gewicht: ca. 70%, sehr unebene Oberfläche mit vielen, bis zu 5 mm großen Löchern; sehr stark abgebaut
Beispiel 4: Gewicht ca. 93%; visuell kein Unterschied zur Beurteilung nach 3 Wochen

Bioabbaubarkeit der Polyurethandispersionen:
Der Test auf Bioabbaubarkeit erfolgte für die wässrigen Dispersionen der Beispiele 1, 2, 3 und 5 durch Analyse des freigesetzten Kohlenstoffdioxids nach ISO 14855 (2005). Der in Prozent gemessene Grad des Bioabbaus ist definiert als das Verhältnis von in Form von CO₂ freigesetztem gasförmigen Kohlenstoff zu dem Gesamtkohlenstoffgehalt des eingesetzten Materials. Die Ergebnisse sind in Tabelle 1 zusammengefasst.

**Tabelle 1: biologischer Abbau von Polyurethandispersionen**

| Beispiel | Abbau [%] nach 20 Tagen | Abbau [%] nach 28 Tagen |
|---|---|---|
| Beispiel 1 | 70 | 79 |
| Beispiel 2 | 34 | 39 |
| Beispiel 3 | 0 | 0 |
| Beispiel 5 | 90 | 95 |

Desintegration von Verbundfolien:
Gemäß der Norm EN 13432 (2000) ist ein Verpackungsmaterial ausreichend durch Desintegration abbaubar, wenn nach einer aeroben Kompostierung von höchstens 12 Wochen Dauer in einer > 2mm-Siebfraktion maximal 10% des ursprünglichen Trockengewichts des Prüfmaterials gefunden werden.

Eine Verbundfolie wurde hergestellt, indem eine Folie aus Polymilchsäure mit der Polyurethandispersion gemäß Beispiel 1 beschichtet und mit einer zweiten Folie aus Polymilchsäure verklebt wurde. Die Verbundfolie hatte ein Gesamtdicke von 49 Mikrometern. Es wurde die Desintegration gemäß EN 13432 (2000) bestimmt.

Für die Verbundfolie wurde nach höchstens 12 Wochen Dauer eine Restmenge von 8,2% für die 2 mm-Siebfraktion gefunden. Die Folie erfüllt daher die Bedingungen der Norm EN 13432 hinsichtlich Desintegration durch Kompostierung und ist somit gut abbaubar.

## Patentansprüche

1. Verwendung eines wässrigen Polyurethandispersionsklebstoffs zur Herstellung von biologisch desintegrierbaren Verbundfolien wobei mindestens ein erstes Substrat unter Verwendung des Polyurethandispersionsklebstoffs mit mindestens einem zweiten Substrat verklebt wird, wobei beide Substrate biologisch desintegrierbar sind und mindestens eines der Substrate eine biologisch desintegrierbare Polymerfolie ist und wobei das Polyurethan zu mindestens 60 Gew.-% aufgebaut ist aus
(a) mindestens einem Diisocyanat,
(b) mindestens einem Polyesterdiol und
(c) mindestens einer bifunktionellen Carbonsäure, ausgewählt aus Dihydroxycarbonsäuren und Diaminocarbonsäuren,
**dadurch gekennzeichnet, dass** der Polyurethandispersionsklebstoff biologisch abbaubar ist, wobei das Verhältnis von in Form von CO2 freigesetztem, gasförmigen Kohlenstoff zu dem Gesamtkohlenstoff des eingesetzten Polyurethanklebstoffs nach 20 Tagen mindestens 30% beträgt, gemessen gemäß der Norm ISO 14855 (2005)
und wobei das mindestens eine Polyesterdiol (b) zu mindestens 80 Gew.% aufgebaut ist aus mindestens einer aliphatischen Dicarbonsäure und mindestens einem aliphatischen Diol, und wobei biologische Desintegrierbarkeit gegeben ist, wenn nach einer aeroben Kompostierung von höchstens 12 Wochen Dauer in einer > 2mm-Siebfraktion maximal 10% des ursprünglichen Trockengewichts des Prüfmaterials gefunden werden, gemessen gemäß der Norm EN 13432 (2000).

2. Verwendung nach dem vorhergehenden Anspruch, **dadurch gekennzeichnet, dass** das Polyurethan zu mindestens 80 Gew.% aus mindestens einem Polyesterdiol (b) aufgebaut ist.

3. Verwendung nach einem der vorhergehenden Ansprüche, **dadurch gekennzeichnet, dass** das Polyurethan aufgebaut ist aus
a) mindestens einem Diisocyanat,
b) mindestens einem Diol, von denen
b₁₎ 10 bis 100 mol-%, bezogen auf die Gesamtmenge der Diole (b), Polyesterdiole sind mit einem Molekulargewicht von 500 bis 5000 g/mol,
b₂₎ 0 bis 90 mol-%, bezogen auf die Gesamtmenge der Diole (b), ein Molekulargewicht von 60 bis 500 g/mol aufweisen,
c) mindestens einer bifunktionellen Carbonsäure, ausgewählt aus Dihydroxycarbonsäuren und Diaminocarbonsäuren,
d) optional weiteren, von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) optional von den Monomeren (a) bis (d) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt.

4. Verwendung nach einem der vorhergehenden Ansprüche, **dadurch gekennzeichnet, dass** der Polyurethandispersionsklebstoff mindestens einen externen Vernetzer enthält.

5. Verwendung nach dem vorhergehenden Anspruch, **dadurch gekennzeichnet, dass** der Vernetzer ausgewählt ist aus mindestens zwei Isocyanatgruppen aufweisenden, aus Diisocyanaten gebildeten Isocyanuraten, Verbindungen mit mindestens einer Carbodiimidgruppe, chemisch blockierten Isocyanaten, verkapselten Isocyanaten, verkapselten Uretdionen, Biureten, Allophanaten, Aziridinen, Oxazolinen, Epoxiden und Mischungen der genannten Stoffe.

6. Verwendung nach einem der vorhergehenden Ansprüche, **dadurch gekennzeichnet, dass** das Material des ersten Substrats ausgewählt ist aus Lignin, Stärke, Cellulosematerialien, Polymilchsäure, Polyglykolsäure, aliphatischen Polyestern, aliphatisch-aromatischen Copolyestern, Polyhydroxyalkanoaten, Polypropylencarbonat und Mischungen der genannten Materialien und das Material des zweiten Substrats ausgewählt aus Papier, Lignin Stärke, Cellulosematerialien, Polymilchsäure, Polyglykolsäure, aliphatischen Polyestern, aliphatisch-aromatischen Copolyestern, Polyhydroxyalkanoaten, Polypropylencarbonat und Mischungen der genannten Materialien.

7. Verwendung nach einem der vorhergehenden Ansprüche zur Herstellung von flexiblen Verpackungen.

8. Verfahren zur Herstellung von Verbundfolien, **dadurch gekennzeichnet, dass** ein wässriger Polyurethandispersionsklebstoff mit den auf Polyurethane bezogenen Merkmalen der Ansprüche 1 bis 5 zur Verfügung gestellt wird und mindestens zwei Substrate unter Verwendung des wässrigen Polyurethandispersionsklebstoffs miteinander verklebt werden, wobei mindestens eines der Substrate eine biologisch desintegrierbare Polymerfolie ist.

9. Verbundfolie, hergestellt gemäß Anspruch 8.

## Claims

1. The use of an aqueous polyurethane dispersion adhesive for producing biodisintegratable composite foils, where at least one first substrate is adhesive-bonded to at least one second substrate with use of the polyurethane dispersion adhesive, where both substrates are biodisintergrateable and at least one of the substrates is a biodisintegratable polymer foil, and where at least 60% by weight of the polyurethane is composed of
(a) at least one diisocyanate,
(b) at least one polyesterdiol, and
(c) at least one bifunctional carboxylic acid selected from dihydroxycarboxylic acids and diaminocarboxylic acids,
wherein the polyurethane dispersion adhesive is biodegradable, where, after 20 days, the ratio of gaseous carbon liberated in the form CO₂ to total carbon of the polyurethane adhesive used is at least 30%, measured in accordance with standard ISO 14855 (2005)
and where at least 80% by weight of the at least one polyesterdiol (b) is composed of at least one aliphatic dicarboxylic acid and of at least one aliphatic diol, and where a material has biodisintegratability if at most 10% of the original dry weight of the test material are found to be present after aerobic composting for a period of at most 12 weeks in a sieve fraction > 2 mm, where the measurement is made in accordance with the standard EN 13432 (2000)

2. The use according to the preceding claim, wherein at least 80% by weight of the polyurethane is composed of at least one polyesterdiol (b).

3. The use according to either of the preceding claims, wherein the polyurethane is composed of
a)at least one diisocyanate,
b)at least one diol, where, of these,
b₁₎ from 10 to 100 mol%, based on the total amount of the diols (b), are polyesterdiols with a molar mass of from 500 to 5000 g/mol,
b₂₎ from 0 to 90 mol%, based on the total amount of the diols (b), have a molar mass of from 60 to 500 g/mol,
c) at least one bifunctional carboxylic acid selected from dihydroxycarboxylic acids and diaminocarboxylic acids,
d)optionally other polyfunctional compounds which differ from the monomers (a) to (c) and which have reactive groups, where these are alcoholic hydroxy groups, primary or secondary amino groups, or isocyanate groups, and
e) optionally monofunctional compounds which differ from the monomers (a) to (d) and which have a reactive group which is an alcoholic hydroxy group, a primary or secondary amino group, or an isocyanate group.

4. The use according to any of the preceding claims, wherein the polyurethane dispersion adhesive comprises at least one external crosslinking agent.

5. The use according to the preceding claim, wherein the crosslinking agent has been selected from isocyanurates formed from diisocyanates and having at least two isocyanate groups, compounds having at least one carbodiimide group, chemically capped isocyanates, encapsulated isocyanates, encapsulated uretdiones, biurets, allophanates, aziridines, oxazolines, epoxides, and mixtures of the substances mentioned.

6. The use according to any of the preceding claims, wherein the material of the first substrate has been selected from lignin, starch, cellulose materials, polylactic acid, polyglycolic acid, aliphatic polyesters, aliphatic-aromatic copolyesters, polyhydroxyalkanoates, polypropylene carbonate, and mixtures of the materials mentioned, and the material of the second substrate has been selected from paper, lignin, starch, cellulose materials, polylactic acid, polyglycolic acid, aliphatic polyesters, aliphatic-aromatic copolyesters, polyhydroxyalkanoates, polypropylene carbonate, and mixtures of the materials mentioned.

7. The use according to any of the preceding claims, for producing flexible packaging.

8. A process for producing composite foils, which comprises providing an aqueous polyurethane dispersion adhesive with the polyurethane-based features of claims 1 to 5, and adhesive-bonding at least two substrates to one another with use of the aqueous polyurethane dispersion adhesive, where at least one of the substrates is a biodisintegratable polymer foil.

9. A composite foil produced according to claim 8.

## Revendications

1. Utilisation d'un adhésif à base d'une dispersion aqueuse de polyuréthane pour la fabrication de films composites biologiquement désintégrables, au moins un premier substrat étant collé avec au moins un deuxième substrat en utilisant l'adhésif à base d'une dispersion de polyuréthane, les deux substrats étant biologiquement désintégrables et au moins un des substrats étant un film polymère biologiquement désintégrable et le polyuréthane étant formé à hauteur d'au moins 60 % en poids par :
(a) au moins un diisocyanate,
(b) au moins un polyester-diol et
(c) au moins un acide carboxylique bifonctionnel, choisi parmi les acides dihydroxycarboxyliques et les acides diaminocarboxyliques,
**caractérisée en ce que** l'adhésif à base d'une dispersion de polyuréthane est biodégradable, le rapport entre le carbone gazeux libéré sous la forme de CO₂ et le carbone total de l'adhésif à base de polyuréthane utilisé après 20 jours étant d'au moins 30 %, mesuré selon la norme ISO 14855 (2005),
et ledit au moins un polyester-diol (b) étant formé à hauteur d'au moins 80 % en poids par au moins un acide dicarboxylique aliphatique et au moins un diol aliphatique,
et la désintégrabilité biologique étant obtenue lorsqu'après un compostage aérobie d'une durée d'au plus 12 semaines en une granulométrie > 2 mm, au plus 10 % du poids sec initial du matériau d'essai est trouvé, mesuré selon la norme EN 13432 (2000).

2. Utilisation selon la revendication précédente, **caractérisée en ce que** le polyuréthane est formé à hauteur d'au moins 80 % en poids par au moins un polyester-diol (b).

3. Utilisation selon l'une quelconque des revendications précédentes, **caractérisée en ce que** le polyuréthane est formé par :
a) au moins un diisocyanate,
b) au moins un diol, parmi lesquels
b₁) 10 à 100 % en moles, par rapport à la quantité totale des diols (b), sont des polyester-diols ayant un poids moléculaire de 500 à 5 000 g/mol,
b₂) 0 à 90 % en moles, par rapport à la quantité totale des diols (b), présentent un poids moléculaire de 60 à 500 g/mol,
c) au moins un acide carboxylique bifonctionnel, choisi parmi les acides dihydroxycarboxyliques et les acides diaminocarboxyliques,
d) éventuellement d'autres composés polyvalents différents des monomères (a) à (c), contenant des groupes réactifs qui sont des groupes hydroxyle alcooliques, des groupes amino primaires ou secondaires ou des groupes isocyanate, et
e) éventuellement des composés monovalents différents des monomères (a) à (d), contenant un groupe réactif qui est un groupe hydroxyle alcoolique, un groupe amino primaire ou secondaire ou un groupe isocyanate.

4. Utilisation selon l'une quelconque des revendications précédentes, **caractérisée en ce que** l'adhésif à base d'une dispersion de polyuréthane contient au moins un agent de réticulation externe.

5. Utilisation selon la revendication précédente, **caractérisée en ce que** l'agent de réticulation est choisi parmi les isocyanurates comprenant au moins deux groupes isocyanate, formés à partir de diisocyanates, les composés contenant au moins un groupe carbodiimide, les isocyanates bloqués chimiquement, les isocyanates coiffés, les uretdiones coiffées, les biurets, les allophanates, les aziridines, les oxazolines, les époxydes et les mélanges des substances mentionnées.

6. Utilisation selon l'une quelconque des revendications précédentes, **caractérisée en ce que** le matériau du premier substrat est choisi parmi la lignine, l'amidon, les matériaux cellulosiques, l'acide polylactique, l'acide polyglycolique, les polyesters aliphatiques, les copolyesters aliphatiques-aromatiques, les polyhydroxyalcanoates, le polycarbonate de propylène et les mélanges des matériaux mentionnés, et le matériau du deuxième substrat est choisi parmi le papier, la lignine, l'amidon, les matériaux cellulosiques, l'acide polylactique, l'acide polyglycolique, les polyesters aliphatiques, les copolyesters aliphatiques-aromatiques, les polyhydroxyalcanoates, le polycarbonate de propylène et les mélanges des matériaux mentionnés.

7. Utilisation selon l'une quelconque des revendications précédentes, pour la fabrication d'emballages flexibles.

8. Procédé de fabrication de films composites, **caractérisé en ce qu'**un adhésif à base d'une dispersion aqueuse de polyuréthane présentant les caractéristiques relatives aux polyuréthanes des revendications 1 à 5 est mis à disposition, et au moins deux substrats sont collés l'un avec l'autre en utilisant l'adhésif à base d'une dispersion aqueuse de polyuréthane, au moins un des substrats étant un film polymère biologiquement désintégrable.

9. Film composite, fabriqué selon la revendication 8.
